(19) Europäisches Patentamt
European Patent Office
Office européen des brevets

(11) Publication number: **0 221 508 B1**

(12) **EUROPEAN PATENT SPECIFICATION**

(45) Date of publication of patent specification: **26.01.94** (51) Int. Cl.5: **G01N 27/30**

(21) Application number: **86115035.7**

(22) Date of filing: **29.10.86**

(54) **Sodium ion selective electrode.**

(30) Priority: **30.10.85 JP 241505/85**

(43) Date of publication of application:
**13.05.87 Bulletin 87/20**

(45) Publication of the grant of the patent:
**26.01.94 Bulletin 94/04**

(84) Designated Contracting States:
**DE GB**

(56) References cited:

**ANALYTICAL CHEMISTRY, vol. 54, no. 7, June 1982, pages 1224-1227, American Chemical Society, Easton, Pennsylvania, US; H. TAMURA et al.: "Coated wire sodium- and potassium-selective electrodes based on bis (crown ether) compounds"**

**PATENTS ABSTRACTS OF JAPAN, vol. 7, no. 51 (P-179)[1196], 26th February 1983; & JP-A-57 198 858**

**J. Electroanal. Chem., vol. 132, 1982, p. 99-105, Elsevier Sequoia S.A., Lausanne; T. Shono et al.: "Sodium-selective PVC membrane electrodes based on bis(12-crown-4)s**

(73) Proprietor: **HITACHI, LTD.**
**6, Kanda Surugadai 4-chome**
**Chiyoda-ku, Tokyo 100(JP)**

(72) Inventor: **Shibata, Yasuhisa**
**1128-5, Omiyamachi**
**Naka-gun**
**Ibaraki-ken(JP)**
Inventor: **Miyagi, Hiroyuki**
**5-37, Joto-2-chome**
**Mito-shi(JP)**

(74) Representative: **Altenburg, Udo, Dipl.-Phys. et al**
**Patent- und Rechtsanwälte**
**Bardehle-Pagenberg-Dost-Altenburg-Frohwitter & Partner**
**Postfach 86 06 20**
**D-81633 München (DE)**

EP 0 221 508 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

This invention relates to a sodium ion selective electrode, more particularly to a neutral carrier type ion selective electrode suitable for measuring the sodium ion concentration in living body fluids such as blood.

As methods for measuring sodium ions in a living body fluid, particularly in serum, plasma, etc., there are flame photometry and an ion electrode method. As to the ion electrode method, it is known a method wherein a neutral carrier is used as an ion sensitive substance (e.g. Japanese Patent Unexamined Publication No. 59-214752). In order to measure sodium ion in serum with high precision, it is required to have high selectivity for potassium ions. It is reported in Analytical Chemistry vol. 54, 1224-1227 (1982) that bis(crown ether) compounds are useful as a neutral carrier type sodium ion sensitive substance having selectivity of about 0.01 for potassium ions. The bis(crown ether) compounds are also applicable to a liquid membrane type ion selective electrode.

But the sodium ion selective electrode using the bis(crown ether) compounds as an ion sensitive substance has a defect in that interference by lipophilic anions is great when the bis(crown ether) compounds are simply dispersed in a support membrane together with a plasticizer.

### SUMMARY OF THE INVENTION

It is an object of this invention to provide a sodium ion selective electrode which can reduce undesirable influence caused by interference of lipophilic anions.

This invention provides a sodium ion selective electrode as defined in claim 1.

### BRIEF DESCRIPTION OF THE DRAWINGS

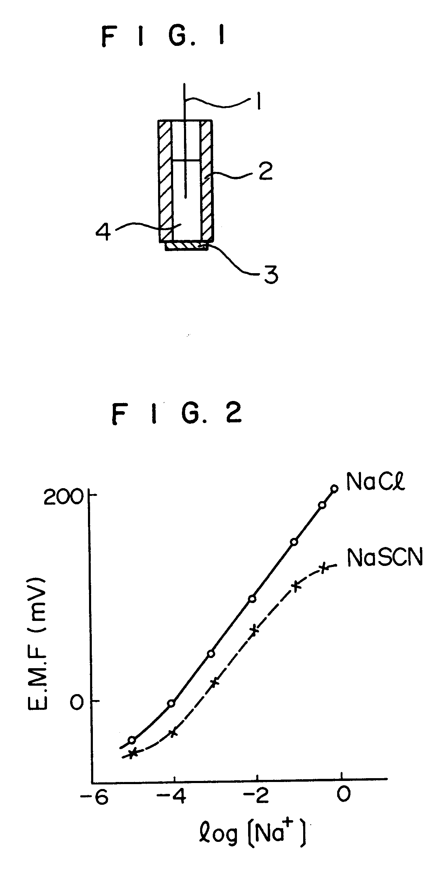

Fig. 1 is a schematic sectional view of one example of the sodium ion selective electrode of this invention. Fig. 2 is a graph showing an influence of an lipophilic anions when an ion sensitive membrane containing no sodium salt of lipophilic organic compound is used. Fig. 3 is a graph showing an influence of lipophilic anions when an ion sensitive membrane containing a sodium salt of lipophilic organic compound is used. Fig. 4 is a graph showing a life of an electrode of this invention.

### DESCRIPTION OF THE PREFERRED EMBODIMENTS

The sodium ion selective electrode of this invention contains a sodium salt of lipophilic organic compound in accordance with the characterizing part of claim 1 in an ion sensitive membrane, so that release of a bis(crown ether) and a plasticizer from the ion sensitive membrane is prevented and a sodium ion concentration can be measured with high precision even if lipophilic anions are present in a sample solution to be measured.

The sodium ion selective electrode of this invention can have a structure as shown in Fig. 1, which is a schematic cross-sectional view of a stick or probe type electrode wherein numeral 1 denotes an inner electrode, 2 an electrode tube, 3 an ion sensitive membrane, and 4 an inner solution.

As the inner electrode, there can be used conventionally used ones such as silver/silver chloride, etc., or calomel electrode in place of silver/silver chloride electrode.

As the electrode tube, there can be used those made from organic polymers conventionally used and having an affinity for or adhesiveness to the ion sensitive membrane such as polyvinyl chloride, polycarbonates, etc.

As the inner solution, there can be used conventional ones such an aqueous solution of sodium chloride in a concentration of 1 to 100 mmole/ℓ, a buffer solution containing NaCl, etc.

The ion sensitive membrane can be prepared by dissolving a support membrane base material, a bis-(crown ether), a plasticizer and a sodium salt of lipophilic organic compound in an organic solvent, coating the resulting solution on a flat plate such as a glass plate, and removing the solvent by evaporation.

As the support membrane base material, there is used polyvinyl chloride.

The bis(crown ether)s are used as a neutral carrier type ion sensitive substance. As the bis(crown ether)s, there can be used those represented by the formula:

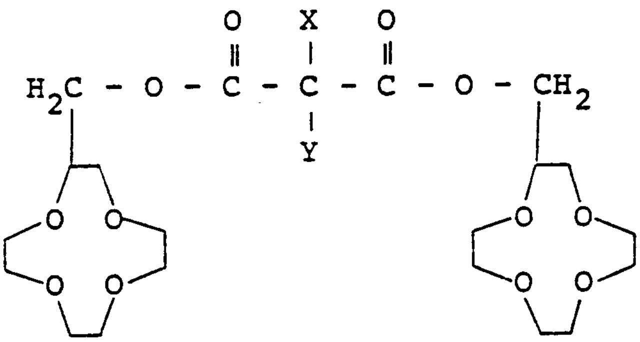

(1)

wherein X is hydrogen or a lower alkyl group preferably having 1 to 6 carbon atoms; and Y is an alkyl group having 12 to 25 carbon atoms.

Examples of the bis (crown ether)s of the formula (1) are bis[(12-crown-4)methyl]methyltetracosyl malonate ($X = CH_3$, $Y = C_{24}H_{49}$), bis[(12-crown-4)methyl]methyldodecyl malonate ($X = CH_3$, $Y = C_{12}H_{25}$), bis[-(12-crown-4)methyl]methylcetyl malonate ($X = CH_3$, $Y = C_{16}H_{33}$), bis[(12-crown-4)methyl]ethyldodecyl malonate ($X = C_2H_5$, $Y = C_{12}H_{25}$), etc.

Since the bis(crown ether)s have a long chain alkyl group therein, the lipophilic properties are enhanced.

As the plasticizers, there are used organic compounds having low dielectric constants and selected from alkyl adipates, e.g. dioctyl adipate, bis(1-butylpentyl) adipate, etc.; alkyl phthalates, e.g. dioctyl phthlate, dibutyl phthalate, dipentyl phthalate, etc.; alkyl sebacates, e.g. dioctyl sebacate, dibutyl sebacate, etc.; and phosphates such as tris(2-ethylhexyl)phosphate, etc. These compounds can be used alone or as a mixture thereof.

In liquid membrane type electrodes, it is said that an ion sensitive substance and a plasticizer which constitute an ion sensitive membrane are gradually released from the ion sensitive membrane to influence the life of electrode. This can also be applied to the sodium ion selective electrode using a bis(crown ether) as an ion sensitive substance. In order to prevent the release of these compounds, it is necessary to use an organic compound having good compatibility with the ion sensitive substance and the support membrane base material, and being hardly soluble in water and hardly released from the ion sensitive membrane as a ligand. Further, it is also required to reduce the influence of lipophilic anions, etc., in a sample.

As a compound having such functions, there is used a sodium salt of lipophilic organic compound in addition to the plasticizer. The used sodium salts of lipophilic organic compounds are sodium [3,5-bis-(trifluoromethyl)phenyl]borate, sodium dodecylsulfonate, sodium dodecylbenzenesulfonate, sodium benzenesulfonate, sodium naphthalenesulfonate or sodium thiocyanate.

The sodium salt of lipophilic organic compound is preferably used in an amount of 5 to 80% by mole, more preferably 5 to 50% by mole, based on 100% by mole of the bis(crown ether) as an ion sensitive substance. If the amount is too small, interference of lipophilic anions (e.g. derived from sodium thiocyanate) takes place, which results in occurrence of an electrode output in disagreement with that in a sodium chloride solution, that is, dissociation in electrode outputs. On the other hand, when the amount is too much, an ion exchange type reaction between the sodium salt of lipophilic organic compound and sodium ions becomes predominant over an ion coordination type reaction with the bis(crown ether), these two reactions constituting competitive reactions, and thus the function of bis(crown ether) cannot be exhibited.

The support membrane base material, the bis(crown ether), the plasticizer and the sodium salt of lipophilic organic compound are dissolved in an organic solvent in amounts as follows:

| | |
|---|---|
| support membrane base material | 20 to 40% by weight |
| bis(crown ether) | 0.5 to 15% by weight |
| plasticizer | 50 to 70% by weight |
| Na salt of lipophilic org. compound | 5 to 80% by mole per 100% by mole of bis(crown ether) (ligand) |

As the organic solvent, there can be used tetrahydrofuran (THF), cyclohexanone, a mixture thereof, and other conventional organic solvents which have compatibility with the ion sensitive substance and the support membrane base material and suitable volatility.

The resulting solution is coated on a flat plate such as a glass plate, followed by removal of the solvent at room temperature or higher but 50 ° C or lower to give an ion sensitive membrane.

The ion sensitive membrane thus produced can have a desirable shape such as a circle, etc., and can be used in a stick type or probe type electrode, a flow type (or flow-through type) electrode, etc.

Since the sodium ion selective electrode of this invention is little in interference of lipophilic anions in a sample, high in measurement precision and long in the electrode life, it is very advantageous to measure the sodium ion concentration in a living body fluid such as blood.

This invention is illustrated by way of the following Example.

Example (Comparison)

As the bis(crown ether) of the formula (1), there was used bis[(12-crown-4)methyl]methyltetracosyl malonate ($X = CH_3$, $Y = C_{24}H_{49}$). In tetrahydrofuran, 3% by weight of this bis[crown ether), 67% by weight of dioctyl adipate as a plasticizer having a low dielectric constant (about 4) and 30% by weight of polyvinyl chloride as a support membrane base material were dissolved. The resulting solution was coated on a glass plate and the solvent was removed by vaporization at room temperature to give a sodium ion sensitive membrane. Using the resulting membrane, a sodium ion selective electrode as shown in Fig. 1 was prepared. In Fig. 1, numeral 3 denotes the ion sensitive membrane mentioned above, 1 a silver/silver chloride inner electrode, 4 an inner solution (10 mmole/ℓ of aqueous solution of sodium chloride) and 2 is an electrode tube made from polyvinyl chloride.

The resulting sodium ion selective electrode was good in selectivity to cations, particularly good in selectivity coefficient for potassium ions, i.e.,

$$K_{Na,K}^{Pot} = 0.01.$$

The calibration curve showed good linearity in the range of sodium concentration of $10^{-4}$ mole/ℓ, to $10^{\circ}$ mole/ℓ, and the slope sensitivity was about 55 mV/dec.

The electrode response in a solution of sodium thiocyanate (NaSCN) which is a typical example of lipophilic anions by using the sodium ion selective electrode mentioned above was examined. As a result, it was revealed that the electrode output was in disagreement with that measured in a sodium chloride (NaCl) solution as shown in Fig. 2. Such disagreement seems to be derived from an influence of lipophilic anions ($SCN^-$) taken into the ion sensitive membrane.

As mentioned above, according to this invention, there can be obtained the sodium ion selective electrode having high selectivity for potassium ions, and being hardly influenced by lipophilic anions in samples, and stable for a long period of time. Thus, the sodium ion concentration in living body fluids can be measured with high precision and the life of electrode can be prolonged remarkably.

## Claims

**1.** An ion selective electrode containing an inner electrode, an inner solution and an ion sensitive membrane comprising polyvinyl chloride, a plasticizer, a sodium salt of lipophilic organic compound, and a neutral carrier, **characterized** in that said ion selective electrode is a sodium ion selective electrode and that said neutral carrier is a bis(crown ether), said plasticizer is an organic compound having a low dielectric constant and selected from alkyl adipates, alkyl phthalates, alkyl sebacates and phosphates, and said sodium salt of lipophilic organic compound is sodium [3,5-bis(trifluoromethyl)-phenyl]borate, sodium dodecylsulfonate, sodium dodecylbenzenesulfonate, sodium benzenesulfonate, sodium naphthalenesulfonate or sodium thiocyanate.

2. The electrode according to claim 1, wherein the bis(crown ether) is represented by the formula:

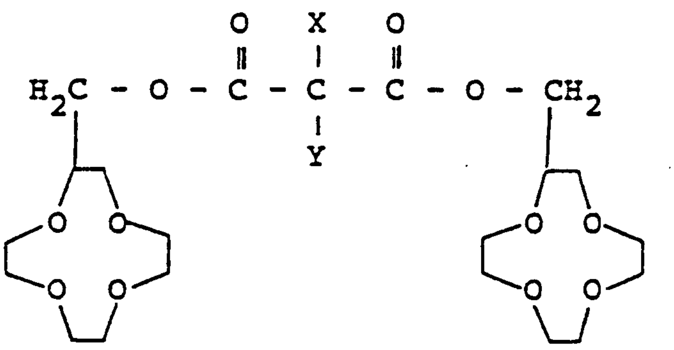

(1)

wherein X is hydrogen or a lower alkyl group; and Y is an alkyl group having 12 to 25 carbon atoms.

3. The electrode according to claims 1 or 2, wherein the sodium salt of lipophilic organic compound is used in an amount of 5 to 50% by mole based on the amount of the bis(crown ether).

4. The electrode according to claim 2, wherein the bis(crown ether) of the formula (1) is bis[(12-crown-4)-methyl]methyltetracosyl malonate, bis[(12-crown-4)methyl]methyldodecyl malonate, bis[(12-crown-4)-methyl]methylcetyl malonate, or bis[(12-crown-4)methyl]ethyldodecyl malonate.

5. An ion sensitive membrane for use in an ion selective electrode according to any of claims 1 to 4 comprising polyvinyl chloride, a plasticizer, a sodium salt of lipophilic organic compound, and a neutral carrier, **characterized** in that said neutral carrier is a bis(crown ether), said plasticizer is an organic compound having a low dielectric constant and selected from alkyl adipates, alkyl phthalates, alkyl sebacates and phosphates, and said sodium salt of lipophilic organic compound is sodium [3,5bis-(trifluoromethyl)phenyl]borate, sodium dodecylsulfonate, sodium dodecylbenzenesulfonate, sodium benzenesulfonate, sodium naphthalenesulfonate or sodium thiocyanate.

6. The electrode according to claim 1, wherein the plasticizer is at least one member selected from dioctyl adipate, dipentyl phthalate, dioctyl sebacate, dibutyl sebacate and tris(2-ethylhexyl)phosphate

## Patentansprüche

1. Ionenselektive Elektrode enthaltend eine innere Elektrode, eine innere Lösung, und eine ionensensitive Membran aufweisend Polyvinylchlorid, einen Weichmacher, ein Natriumsalz einer lipophilen organischen Verbindung und einen neutralen Träger,

**dadurch gekennzeichnet,** daß

die ionenselektive Elektrode eine Natriumionen-selektive Elektrode ist, der neutrale Träger ein bis-(Kronenether) ist, der Weichmacher eine organische Verbindung mit einer niedrigen Dielektrizitätskonstanten ist und aus Alkyladipaten, Alkylphthalaten, Alkylsebacaten und Phosphaten ausgewählt ist, und das Natriumsalz der lipophilen organischen Verbindung Natrium[3,5-bis(trifluormethyl)phenyl]borat, Natriumdodecylsulfonat, Natriumdodecylbenzolsulfonat, Natriumbenzolsulfonat, Natriumnaphthalinsulfonat oder Natriumthiocyanat ist.

2. Elektrode nach Anspruch 1, wobei der bis(Kronenether) dargestellt wird durch die Formel:

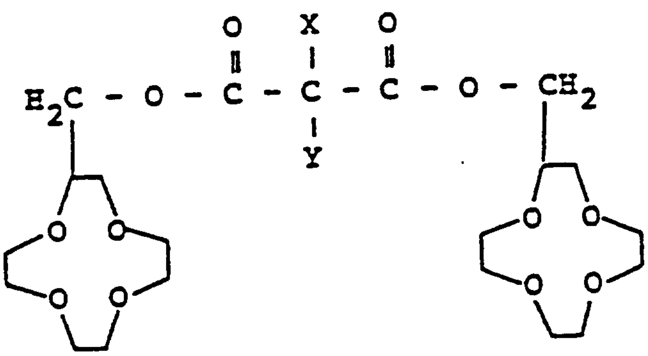

(1)

wobei X Wasserstoff oder eine niedere Alkylgruppe ist; und Y eine Alkylgruppe mit 12 bis 25 Kohlenstoffatomen ist.

3. Elektrode nach Anspruch 1 oder 2, wobei das Natriumsalz der lipophilen organischen Verbindung in einer Menge von 5 bis 50 Mol-% bezogen auf die Menge des bis(Kronenether) verwendet wird.

4. Elektrode nach Anspruch 2, wobei der bis(Kronenether) der Formel (1) bis[(12-Krone-4)-methyl]-methyltetracosylmalonat, bis[(12-Krone-4)methyl]methyldodecylmalonat, bis[(12-Krone-4)methyl]-methylcetylmalonat oder bis[(12-Krone-4)methyl]ethyldodecylmalonat ist.

5. Ionensensitive Membran zur Verwendung in einer ionenselektiven Elektrode nach einem der Ansprüche 1 bis 4, aufweisend Polyvinylchlorid, einen Weichmacher, ein Natriumsalz einer lipophilen organischen Verbindung und einen neutralen Träger,
dadurch gekennzeichnet, daß der neutrale Träger ein bis(Kronenether) ist, der Weichmacher eine organische Verbindung mit einer niedrigen Dielektrizitätskonstanten ist und aus Alkyladipaten, Alkylphthalaten, Alkylsebacaten und Phosphaten ausgewählt ist, und das Natriumsalz der lipophilen organischen Verbindung Natrium[3,5-bis(trifluormethyl)phenyl]borat, Natriumdodecylsulfonat, Natriumdodecylbenzolsulfonat, Natriumbenzolsulfonat, Natriumnaphthalinsulfonat oder Natriumthiocyanat ist.

6. Elektrode nach Anspruch 1, wobei der Weichmacher mindestens einer, ausgewählt aus Dioctyladipat, Dipentylphthalat, Dioctylsebacat, Dibutylsebacat und Tris(2-ethylhexyl)phosphat ist.

**Revendications**

1. Une électrode sélective vis-à-vis des ions contenant une électrode interne, une solution interne et une membrane sensible aux ions comprenant du chlorure de polyvinyle, un plastifiant, un sel de sodium d'un composé organique lipophile et un support neutre, caractérisée en ce que ladite électrode sélective vis-à-vis des ions est une électrode sélective vis-à-vis de l'ion sodium et en ce que ledit support neutre est un bis(couronne éther), ledit plastifiant est un composé organique ayant une faible constante diélectrique et choisi à partir des alkyl-adipates, des alkyl-phtalates, des alkyl-sébaçates et phosphates et ledit sel de sodium du composé organique lipophile est le [3,5-bis(trifluorométhyl)-phényl]borate de sodium, le dodécylsulfonate de sodium, le dodécylbenzènesulfonate de sodium, le benzènesulfonate de sodium, le naphtalène sulfonate de sodium ou le thiocyanate de sodium.

2. L'électrode selon la revendication 1, dans laquelle la bis(couronne éther) est représentée par la formule:

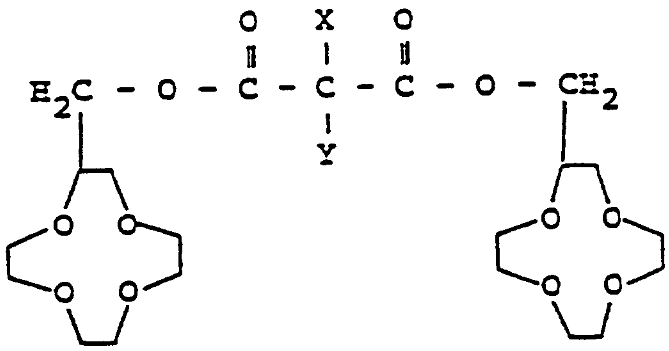

(1)

dans laquelle X est un hydrogène ou un radical alkyle inférieur et Y est un radical alkyle ayant de 12 à 25 atomes de carbone.

3. L'électrode selon la revendication 1 ou la revendication 2, dans laquelle le sel de sodium du composé organique lipophile est utilisé selon une quantité de 5 à 50 mole % calculée sur la quantité du bis-(couronne éther).

4. L'électrode selon la revendication 2, dans laquelle la bis(couronne éther) de formule (1) est le bis[(12-couronne-4)méthyl]méthyltétracosyl-malonate, le bis[(12-couronne-4)méthyl]méthyldodécyl-malonate, le bis[(12-couronne-4)-méthyl]méthylcétyl-malonate ou le bis[(12-couronne-4)méthyl]éthyldodécyl-malonate.

5. Une membrane sensible vis-à-vis des ions destinée à être utilisée dans une électrode sélective vis-à-vis des ions selon l'une quelconque des revendications 1 à 4 comprenant du chlorure de polyvinyle, un plastifiant, un sel de sodium d'un composé organique lipophile et un support neutre, caractérisée en ce que ledit support neutre est un bis(couronne éther), ledit plastifiant est un composé organique ayant une faible constante diélectrique et choisi parmi les alkyl-adipates, les alkyl-phtalates, les alkyl-sébaçates et phosphates et ledit sel de sodium du composé organique lipophile est le [3,5-bis-(trifluorométhyl)phényl]borate de sodium, le dodécylsulfonate de sodium, le dodécylbenzènesulfonate de sodium, le benzènesulfonate de sodium, le naphtalène sulfonate de sodium ou le thiocyanate de sodium.

6. L'électrode selon la revendication 1, dans laquelle le plastifiant est au moins un élément choisi parmi le dioctyl-adipate, le dipentyl-phtalate, le dioctyl-sébaçate, le dibutyl-sébaçate et le tris(2-éthylhexyl)-phosphate.

FIG. 1

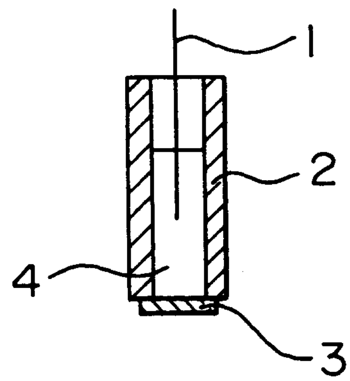


FIG. 2